Europäisches Patentamt

European Patent Office

Office européen des brevets

(11) Numéro de publication : **0 161 119**
**B1**

(12) **FASCICULE DE BREVET EUROPÉEN**

(45) Date de publication du fascicule du brevet :
04.05.88

(51) Int. Cl.⁴ : **F 16 D 65/24**, F 16 D 55/22,
B 60 T 17/08

(21) Numéro de dépôt : 85400309.2

(22) Date de dépôt : 20.02.85

(54) **Mécanisme d'actionnement de frein à disque.**

(30) Priorité : 29.02.84 FR 8403106

(43) Date de publication de la demande :
13.11.85 Bulletin 85/46

(45) Mention de la délivrance du brevet :
04.05.88 Bulletin 88/18

(84) Etats contractants désignés :
DE GB IT NL SE

(56) Documents cités :
DE-A- 1 625 755
FR-A- 2 170 453
US-A- 3 752 266
US-A- 4 369 863

(73) Titulaire : BENDIX France
126, rue de Stalingrad
F-93700 Drancy (FR)

(72) Inventeur : Carre, Jean-Jacques
59, Boulevard de l'Est
F-93340 Le Raincy (FR)
Inventeur : Pressaco, Pierre
45, rue Emile Zola Bâtiment C
F-93120 La Courneuve (FR)
Inventeur : Sauvee, Jean-Paul
76, Boulevard Félix Faure
F-93300 Aubervilliers (FR)

(74) Mandataire : Timoney, Ian Charles Craig et al
Division Technique Service Brevets Bendix Europe
126, rue de Stalingrad
F-93700 Drancy (FR)

Jouve, 18, rue St-Denis, 75001 Paris, France

## Description

L'invention se rapporte à un mécanisme d'actionnement de frein à disque. On connaît notamment du document DE-A-1 625 755 un mécanisme d'actionnement de frein à disque comprenant

un piston couplé à un patin de freinage,

un coin offrant une paire de surfaces inclinées légèrement convergentes et déplaçable longitudinalement, sous l'action d'un organe de commande, suivant une direction transversale par rapport à la direction de déplacement dudit piston entre des surfaces appartenant respectivement au piston et à une contre-pièce, chacune de ces surfaces étant sensiblement parallèle à celle des surfaces du coin qui se trouve en regard et,

au moins une paire de rouleaux disposés de part et d'autre du coin et pouvant rouler entre les surfaces de celui-ci et les surfaces du piston et de la contre-pièce en regard.

Dans un mécanisme d'actionnement de ce genre, lorsque le coin est avancé par l'organe de commande entre le piston et la contre-pièce, laquelle est fixe, le piston subit, par l'intermédiaire des rouleaux roulant sur lesdites surfaces, une poussée qui l'écarte de la contre-pièce et qu'il communique au patin de freinage, la valeur de cette poussée étant un multiple de celle que reçoit de l'organe de commande le coin précité.

Les freins à disque de grande puissance, destinés par exemple à l'équipement des poids lourds, mettent en jeu des forces considérables, qui entraînent une dégradation rapide des rouleaux et des surfaces avec lesquelles ils coopèrent pour transmettre mécaniquement les efforts.

La présente invention a pour but de remédier à cet inconvénient grâce à un agencement visant à soulager les pièces du mécanisme soumises à une forte contrainte de façon à accroître la fiabilité et la longévité de l'ensemble de freinage.

Il est connu du document FR-A-2 170 454 un mécanisme d'actionnement pour frein à tambour du type comportant un piston couplé à une mâchoire de freinage, un coin offrant une paire de surfaces inclinées légèrement convergentes et déplaçable longitudinalement, sous l'action d'un organe de commande, suivant une direction transversale par rapport à la direction de déplacement dudit piston entre des surfaces appartenant respectivement au piston et à un deuxième piston, chacune de ces surfaces étant sensiblement parallèle à celle des surfaces du coin qui se trouve en regard, et au moins une paire de rouleaux disposés de part et d'autre du coin et pouvant rouler entre les surfaces de celui-ci et les surfaces en regard du premier et du deuxième piston, l'espace situé entre lesdites surfaces du premier piston et du deuxième piston dans lequel peuvent se déplacer le coin et les rouleaux étant confiné en une chambre close qui est remplie de liquide hydraulique, l'organe de commande étant une tige pénétrant dans cette chambre hydraulique à un degré variable suivant ses mouvements longitudinaux à partir d'une position de repos. Un tel mécanisme s'intègrant dans une structure complexe de double actionnement permet une mise en œuvre du frein soit par voie mécanique à partir de la tige de commande soit par voie hydraulique à partir d'une source de pression extérieure. De plus une réaction hydraulique sur la tige de commande évite les surcharges en cas de mise en œuvre simultanée et accidentelle des actionnements mécanique et hydraulique. Il est cependant à remarquer que par le choix des dimensions relatives des pistons et de la tige de commande le volume disponible dans la chambre close reste constant lors d'une mise en œuvre exclusivement mécanique du frein par déplacement de la tige. Dans ce cas, l'effort de commande est totalement transmis mécaniquement de la tige au piston au travers des divers éléments mécaniques du dispositif de coin sans possibilité de soulager ceux-ci. La structure complexe connue du document FR-A-2 170 450 ne permet pas d'obtenir l'effet de soulagement recherché par l'invention et se trouve de surcroît inadaptée par rapport au problème résolu par l'invention.

Selon l'invention, il est proposé un mécanisme d'actionnement de frein à disque tel que défini dans la revendication 1 de la présente demande.

Selon un mode de réalisation préférée de l'invention le déplacement du piston par voie hydraulique est supérieur de 1 à 5 % à son déplacement par voie mécanique pour un même déplacement de la tige de commande.

Dans un mécanisme d'actionnement agencé de la manière décrite, la tige de commande sert simultanément d'organe d'actionnement du coin et de piston hydraulique, de sorte qu'il y a deux voies de transmission des efforts de cette tige de commande au patin de freinage : l'une — mécanique — mettant en œuvre de façon classique le coin coopérant avec des rouleaux entre des surfaces obliques du piston et de la contre-pièce ; l'autre — hydraulique — utilisant les variations de pression induites par les déplacements de la tige de commande dans une chambre hydraulique et se répercutant, avec effet multiplicateur de force, sur le piston, mobile également dans cette chambre. Toutefois, la voie hydraulique est rendue prépondérante par un choix approprié des paramètres géométriques des divers éléments mobiles mis en jeu. Par suite, le piston est actionné hydrauliquement, tandis que les rouleaux et les surfaces avec lesquelles ils coopèrent sont déchargés et ne subissent donc ni contraintes, ni usure. Mais le coin et les rouleaux se trouvent constamment en position correcte entre le piston et la contre-pièce, de sorte que la voie mécanique reste disponible, prête à se substituer à la voie hydraulique si besoin est, par exemple en cas de défaillance hydraulique ou en cas de freinage de parking (qui doit obligatoirement s'effectuer de manière purement mécanique).

Afin d'éviter des chocs néfastes entre les rouleaux et les surfaces avec lesquelles ils coopèrent au moment d'un passage de la voie hydraulique à la voie mécanique, il convient d'assurer un contact permanent entre les rouleaux et les surfaces précitées. Ce résultat peut être obtenu en rendant la contre-pièce mobile suivant la même direction que le piston, de façon que, en mode hydraulique, elle puisse s'écarter, sous la sollicitation d'un ou de plusieurs ressorts de rappel vers le piston, d'une surface fixe sur laquelle elle prend appui en mode mécanique, les petits déplacements correspondants de la contre-pièce annulant en permanence les jeux entre les rouleaux et les surfaces coopérant avec ceux-ci.

Avantageusement, la chambre hydraulique est en communication avec une chambre d'alimentation en liquide hydraulique à pression constante (en pratique la pression atmosphérique) de laquelle elle se trouve isolée lorsque la tige de commande quitte sa position de repos. Plus précisément, dans une cloison séparant les deux chambres, peut être percé au moins un conduit de mise en communication, qui se trouve obturé par le fût de la tige de commande lorsque celle-ci quitte sa position de repos.

Afin d'avoir la possibilité de mettre fin à volonté au fonctionnement en mode hydraulique pour passer au fonctionnement en mode mécanique, on peut prévoir une soupape de décharge entre les deux chambres, qui peut être commandée pour mettre ces dernières en communication indépendamment de la position de la tige de commande. Lorsque, pour des raisons de sécurité, la tige de commande est couplée à un fort ressort qui tend à la déplacer dans le sens du freinage et est maintenue en situation inopérante par un vérin normalement alimenté en fluide sous pression (er. pratique de l'air comprimé), la soupape de décharge peut être commandée par un petit vérin alimenté en parallèle avec le vérin de maintien dudit ressort, de façon à rester fermée tant que ce dernier vérin est alimenté et à s'ouvrir dans le cas contraire. Si donc le fluide sous pression vient à manquer (par suite soit d'une défaillance, soit d'une commande volontaire de freinage d'urgence ou de parking), les deux chambres précitées sont automatiquement mises en communication par la soupape de décharge et le fonctionnement passe en mode mécanique, conformément aux exigences de la législation.

De préférence, le coin est monté à l'extrémité de la tige de commande avec possibilité de léger débattement par rapport à l'axe de ladite tige. Par ailleurs, il convient que les rouleaux soient tenus dans une cage montée à l'extrémité de la tige de commande et sollicitée par un ressort de rappel dans le sens de convergence des surfaces du coin.

D'autres caractéristiques et avantages de l'invention ressortiront plus clairement de la description qui va suivre, en regard des dessins annexés, d'un exemple de réalisation non limitatif.

La figure 1 représente en coupe longitudinale un mécanisme d'actionnement de frein à disque selon l'invention.

La figure 2 représente à plus grande échelle une coupe selon la ligne II-II de l'objet de la figure 1.

La figure 3 représente, à échelle encore agrandie, une coupe selon la ligne III-III de l'objet de la figure 1.

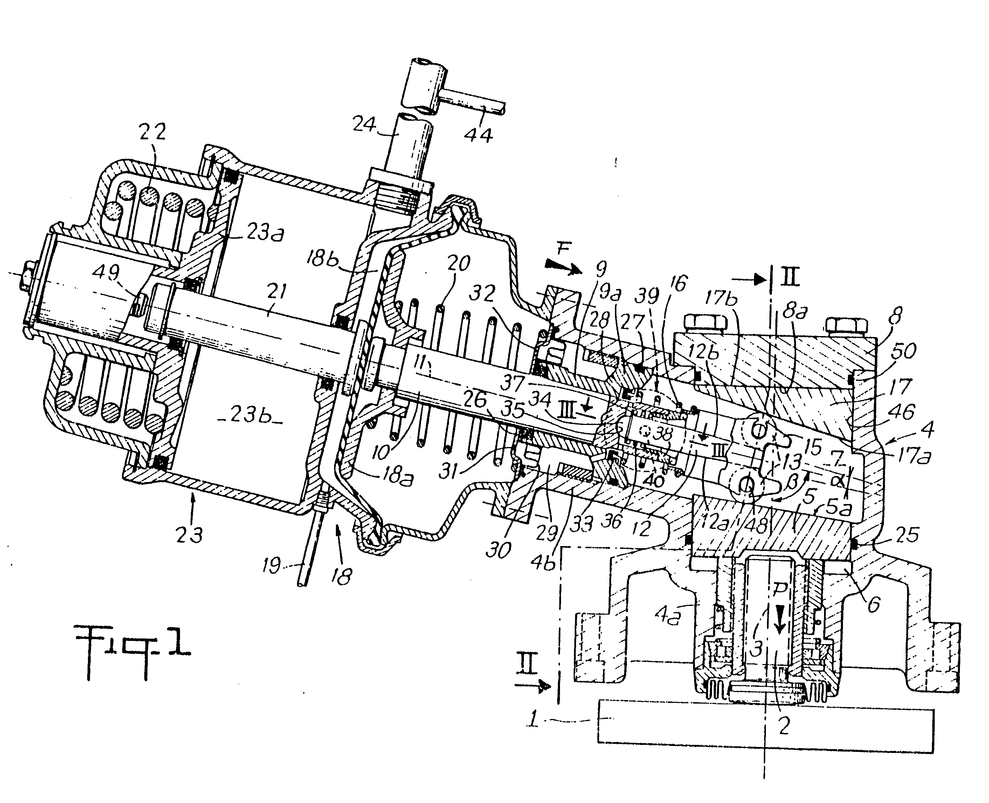

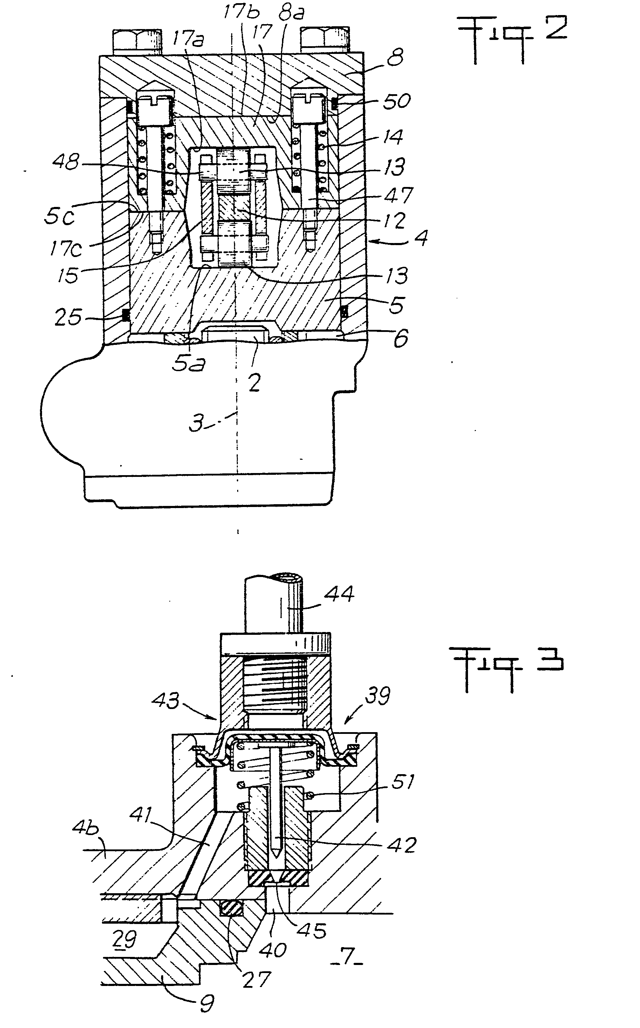

Le mécanisme d'actionnement de frein à disque représenté comprend une courte tige 2 commandant un patin de freinage 1 et pouvant coulisser suivant son axe 3 dans un manchon 4a appartenant à un carter 4 sous la poussée d'un piston 5 coulissant dans la direction de l'axe 3 à l'intérieur d'une cavité cylindrique 6 de guidage que comporte le carter 4. Dans ce dernier pénètre une tige 10 pouvant coulisser longitudinalement suivant son axe 11 qui fait avec l'axe 3 un angle $\beta$ légèrement inférieur à 90°.

A l'extrémité de la tige 10 qui se trouve à l'intérieur du carter 4 est monté un coin 12 s'étendant suivant l'axe 11 de ladite tige. Ce coin comporte une tête arrondie 34 qui repose dans un logement 35 de forme conjuguée apparaissant à l'extrémité de la tige 10, et qui y est pressée par un ressort de compression 36 interposé entre un organe d'arrêt 37 solidaire du coin 12 et une douille 38 vissée dans l'extrémité — creuse — de la tige 10. Le coin 12, auquel le mode de montage décrit permet de petits débattement angulaires autour de sa position moyenne, offre par ailleurs des surfaces planes 12a, 12b légèrement convergentes sous un angle $\alpha$ et servant de faces d'appui à des rouleaux 13 d'axes 48 orthogonaux à l'axe 11. Ces rouleaux, montés dans une cage 15 qui est attachée élastiquement à ladite extrémité de la tige 11 par l'intermédiaire d'un ressort de compression 16, peuvent rouler respectivement d'une part sur les surfaces obliques 12a, 12b du coin 12 et d'autre part sur des surfaces sensiblement parallèles à ces dernières, l'une étant une surface 5a qu'offre le piston 5 du côté opposé à la tige 2 et l'autre une surface 17a d'une contre-pièce 17 montée à l'intérieur du carter 4 où elle peut exécuter de petits mouvements de translation suivant l'axe 3 de déplacement du piston 5. A cet effet, la contre-pièce 17 est guidée dans une surface cylindrique 46 qu'offre intérieurement la paroi du carter 4 dans le prolongement de la surface cylindrique de la cavité 6 précitée. La contre-pièce 17 est sollicitée vers le piston 5 par des ressorts de compression 14 coopérant avec des vis 47 solidaires du piston. La distance minimale entre les surfaces 5a et 17a du piston 5 et de la contre-pièce 17 est définie par la venue en contact de surfaces de butée respectives 5c et 17c. Dans le sens opposé, la contre-pièce peut venir buter et prendre un ferme appui par sa surface postérieure 17b, perpendiculaire à l'axe 3, sur une surface conjuguée 8a appartenant à un couvercle 8 boulonné sur le carter 4 pour fermer l'ouverture d'introduction dans celui-ci du piston 5 et de la contre-pièce 17.

La tige de commande 10 peut être actionnée en coulissement par le piston 18a d'un vérin pneumatique 18 dans la chambre intérieure 18b est reliée par une conduite 19 à une source d'air comprimé sous le contrôle d'une pédale de commande de frein (non représentée). La tige 10 est à l'inverse ramenée dans sa position de repos (qui est la position représentée) par un ressort de rappel 20. L'envoi d'air comprimé dans la chambre 18b du vérin 18 produit une poussée sur la tige 10 qui se déplace dans le sens de la flèche F avec le coin 12 et les rouleaux 13, ce qui cause, en l'absence des dispositions qui seront décrites plus loin, une poussée de freinage sur le patin 1 par l'intermédiaire du piston 5 et de la tige 2, la force de réaction étant reprise par la contre-pièce 17 adossée au couvercle 8 du carter 4. A une course f de la tige 10 correspond une course p du piston 5 et du patin 1, suivant une relation qui dépend de la géométrie de l'ensemble (essentiellement des angles α des faces du coin 12 et β des axes 11 et 3).

Sur la tige de commande 10 peut être appliquée, par l'intermédiaire d'une tige 21, d'une vis 49 et d'une pièce 23a, la poussée d'un ressort de compression 22 qui est maintenu normalement comprimé, donc sans action sur la tige 10, par un vérin de sécurité 23 pneumatique dont le piston formé par la pièce 23a, retient le ressort 22 tant que la chambre interne 23b de ce vérin est alimentée en air comprimé via une conduite 24. S'il se produit une défaillance du circuit d'air comprimé, ou en cas d'arrêt sur parking du véhicule équipé du frein décrit, la chambre 23b est vidée de son air et le vérin 23 laisse le ressort 22 se détendre et pousser la tige 11 en position extrême de freinage (freinage d'urgence ou de parking).

L'espace intérieur au carter 4 où pénètre la tige 10 et où se déplace le coin 12 et les rouleaux 13 est aménagé pour former une chambre close 7. Cette chambre est délimitée par la paroi du carter 4, son couvercle 8 (doté d'un joint d'étanchéité 50), le piston 5 (coulissant de manière étanche dans le carter 4 grâce à un joint annulaire 25) et l'extrémité de la tige 10, laquelle coulisse de manière étanche dans une douille 9 montée dans un manchon 4b coaxial du carter 4 et munie de joints annulaires 26 et 27. Cette douille 9 comporte une collerette 9a formant une cloison annulaire de séparation entre la chambre 7 et une chambre annulaire 29 d'alimentation en liquide hydraulique, située entre le manchon 4b et la douille 9 et fermée par un soufflet annulaire 30 dont la face extérieure est mise à l'atmosphère par un orifice 31 qu'offre un flasque annulaire 32 monté à l'extrémité du manchon 4b.

La collerette 9a est percée de conduits 28 susceptibles de faire communiquer entre elles les chambres 7 et 29. Ces conduits sont obturés dès que la tige 10, quittant sa position de repos, est amenée à se déplacer suivant la flèche F, la surface latérale du fût de ladite tige venant en contact étanche avec un joint annulaire 33 « Boldwin » monté à l'intérieur de la douille 9, entre le débouché des conduits 28 dans la chambre 7 et le volume intérieur de cette chambre.

Les chambres 7 et 29 sont remplies de liquide hydraulique. Au repos, la pression dans ces chambres, qui communiquent alors par les conduits 28, est égale à la pression atmosphérique (la chambre 29 étant limitée par le soufflet 30 donnant sur l'atmosphère). Lorsqu'on fait se déplacer la tige 10 suivant la flèche F, son extrémité, avec les organes annexés à celle-ci (coin 12, rouleaux 13, etc.), s'enfonce dans la chambre 7. Il y a alors augmentation de la pression du liquide hydraulique enfermé dans cette dernière, qui se trouve maintenant isolée de la chambre 29 du fait de l'obturation des conduits 28 par le fût de la tige 10. Cette augmentation de pression crée une poussée P, via le piston 5, sur le patin 1, lequel assure sa fonction de freinage.

Le dimensionnement du dispositif est conçu de telle façon que les variations de volume de la chambre 7 en fonction de l'enfoncement f de la tige 11 et de ses accessoires déterminent, par voie hydraulique, un déplacement p' du piston 5 légèrement supérieur, de quelques pourcents, au déplacement p correspondant à l'action mécanique qu'auraient le coin 12 et les rouleaux 13, 14 sur le même piston 5. Ainsi, au cours des opérations courantes de freinage, ces derniers organes sont déchargés de toute contrainte mécanique, le déplacement du piston 5 étant obtenu de façon purement hydraulique. Toutefois, lesdits organes se trouvent à tout moment en position correcte entre le piston 5 et la contre-pièce 17 pour, en cas de défaillance de la transmission hydraulique des efforts, prendre le relais et assurer la poursuite de l'action de freinage entreprise.

Le passage du régime hydraulique au régime mécanique s'effectue sans que les rouleaux 13 en souffrent, du fait qu'ils se trouvent constamment en contact avec les surfaces obliques 5a et 17a du piston 5 et de la contre-pièce 17, ces éléments étant rapprochés mutuellement sous l'action des ressorts de rappel 14. Il ne se produit qu'un petit déplacement conjoint du piston 5 et de la contre-pièce 17 vers le couvercle 8, la surface postérieure 17b de la contre-pièce, qui s'était légèrement écartée de celui-ci au cours du fonctionnement en mode hydraulique, venant simplement s'appliquer contre la surface 8a dudit couvercle. Ces déplacements sont de faible amplitude, le mécanisme étant dimensionné de façon que la course hydraulique p' ne surpasse la course mécanique p, pour une même course f de la tige 10, que de 1 à 5 % environ.

Lorsqu'en cas de freinage de parking ou d'urgence l'effort de freinage est fourni par le ressort 22, cet effort doit obligatoirement se propager jusqu'au patin 1 par voie purement mécanique. Ce résultat est obtenu en interrompant dans ce cas le fonctionnement par voie hydraulique, au moyen d'une soupape de décharge 39 montée sur le manchon 4b du carter 4 et susceptible de mettre en communication la chambre 7 avec la chambre 29 via des conduits 40 et 41. La soupape 39 comporte une aiguille 42 actionnée par un petit vérin 43 qui est relié par une conduite 44 à la conduite 24 d'alimentation en air comprimé du vérin 23. Quand la chambre 23b de ce dernier est vidée de son air, l'aiguille 42 de la soupape 39 s'efface sous l'action d'un ressort de rappel 51 en débouchant un orifice 45 qu'elle maintient normalement obturé, et la pression du liquide hydraulique de la chambre 7 chute jusqu'à la valeur de la pression atmosphérique. Ce liquide devient alors inopérant pour transmettre l'effort de freinage au patin 1 qui reçoit alors cet effet par l'intermédiaire du coin 12 et des rouleaux 13, donc par voie purement mécanique. Dès que l'air comprimé est réadmis dans la chambre 23b du vérin 23, la soupape 39 isole à nouveau la chambre 7 de la chambre 29 et la voie hydraulique d'actionnement du patin 1 reprend le pas sur la voie mécanique.

## Revendications

1. Mécanisme d'actionnement de frein à disque, comprenant

un piston couplé à un patin de freinage,

un coin offrant une paire de surfaces inclinées légèrement convergentes et déplaçable longitudinalement, sous l'action d'un organe de commande, suivant une direction transversale par rapport à la direction de déplacement dudit piston entre des surfaces appartenant respectivement au piston et à une contre-pièce, chacune de ces surfaces étant sensiblement parallèle à celle des surfaces du coin qui se trouve en regard, et

au moins une paire de rouleaux disposés de part et d'autre du coin et pouvant rouler entre les surfaces de celui-ci et les surfaces du piston et de la contre-pièce en regard, caractérisé par le fait que l'espace situé entre lesdites surfaces (5a, 17a) du piston (5) et de la contre-pièce (17) dans lequel peuvent se déplacer le coin (12) et les rouleaux (13) est confiné en une chambre (17) close qui est remplie de liquide hydraulique, et que l'organe de commande est une tige (10) qui, pénétrant dans cette chambre hydraulique (7) à un degré variable suivant ses mouvements longitudinaux à partir d'une position de repos, y détermine des variations de volume qui produisent une poussée hydraulique sur le piston (5), le déplacement (p') correspondant de ce dernier étant légèrement plus grand que le déplacement (p) que lui communiquerait mécaniquement le coin (12) par l'intermédiaire des rouleaux (13), pour un même déplacement (f) de la tige de commande (10), en l'absence de liquide hydraulique enfermé dans la chambre (7).

2. Mécanisme selon la revendication 1, caractérisé par le fait que, pour un même déplacement (f) de la tige de commande (10), le déplacement du piston (p') par voie hydraulique est supérieur de 1 à 5 % à son déplacement (p) par voie mécanique.

3. Mécanisme selon la revendication 1 ou 2, caractérisé par le fait que la contre-pièce (17) est mobile suivant la même direction que le piston (5) et peut s'écarter, en mode hydraulique, sous la sollicitation d'un ou de plusieurs ressorts (14) de rappel vers le piston (5), d'une surface d'appui (8a) fixe, pour rester en contact permanent avec le ou les rouleaux (13) se trouvant entre le coin (12) et la contre-pièce (17).

4. Mécanisme selon l'une quelconque des revendications 1 à 3, caractérisé par le fait que la chambre hydraulique (7) est en communication avec une chambre (29) d'alimentation en liquide hydraulique à pression constante, de laquelle elle se trouve isolée lorsque la tige de commande (10) quitte sa position de repos.

5. Mécanisme selon la revendication 4, caractérisé par le fait que dans une cloison (9a) séparant les deux chambres (7, 29) est percé au moins un conduit (28) de mise en communication, qui se trouve obturé par le fût de la tige de commande (10) lorsque celle-ci quitte sa position de repos.

6. Mécanisme selon la revendication 4 ou 5, caractérisé par le fait qu'une soupape de décharge (39) est prévue entre les deux chambres (7, 29), qui peut être commandée pour mettre ces dernières en communication indépendamment de la position de la tige de commande (10).

7. Mécanisme selon la revendication 6, caractérisé par le fait que la tige de commande (10) est couplée à un fort ressort (22) qui tend à la déplacer dans le sens (F) du freinage et est maintenu en situation inopérante par un vérin (23) normalement alimenté en fluide sous pression, et que la soupape de décharge (39) est commandée par un petit vérin (43) alimenté en parallèle avec le vérin (23) de maintien dudit ressort (22), de façon à rester fermée tant que ce dernier vérin est alimenté et à s'ouvrir dans le cas contraire.

8. Mécanisme selon l'une quelconque des revendications 1 à 7, caractérisé par le fait que le coin (12) est monté à l'extrémité de la tige de commance (10) avec possibilité de léger débattement par rapport à l'axe (11) de ladite tige.

9. Mécanisme selon l'une quelconque des revendications 1 à 8, caractérisé par le fait que les rouleaux (13) sont tenus dans une cage (15) montée à l'extrémité de la tige de commande (10) et sollicitée par un ressort de rappel (16) dans le sens de convergence des surfaces (12a, 12b) du coin (12).

## Claims

1. Actuating mechanism for a disc brake, incorporating

a piston coupled to a brake pad,

a wedge having a pair of slightly convergent inclined surfaces which is moveable longitudinally, under the effect of a control component, along a transverse direction relative to the direction of movement of the said piston between surfaces forming part of the piston and of a reaction component, respectively, each of these surfaces being essentially parallel to that surface of the wedge which faces it, and

at least one pair of rollers situated on each side of the wedge and able to roll between the surfaces of the latter and the facing surfaces of the piston and of the reaction component, characterised in that the space situated between the said surfaces (5a, 17a) of the piston (5) and of the reaction component (17) in which the wedge (12) and the rollers (13) are able to move, is confined as a closed chamber (7) which is filled with hydraulic fluid, and that the control component is a rod (10) which, entering into this hydraulic chamber (7) by a variable amount according to its longitudinal movements from a rest position, determines in it variations in volume which produce a hydraulic thrust on the piston (5), the corresponding movement (p') of the latter being slightly greater than the movement (p) which the wedge (12) would communicate to it mechanically through the intermediary of the rollers (13), for the same movement (f) of the control rod (10), in the absence of hydraulic fluid enclosed in the chamber (7).

2. Mechanism according to Claim 1, characterised in that for the same movement (f) of the control rod (10), the movement of the piston (p') by the hydraulic path is greater than its movement (p) by the mechanical path by 1 to 5 %.

3. Mechanism according to Claim 1 or Claim 2, characterised in that the reaction component (17) is moveable in the same direction as the piston (5) and can be separated, in the hydraulic mode, under the pressure towards the piston (5) of one or more return springs (14), from a fixed bearing surface (8a), so as to remain in permanent contact with the roller or rollers (13) situated between the wedge (12) and the reaction component (17).

4. Mechanism according to any one of Claims 1 to 3, characterised in that the hydraulic chamber (7) is in communication with a chamber (29) for supplying hydraulic fluid at constant pressure, from which it becomes isolated when the control rod (10) leaves its rest position.

5. Mechanism according to Claim 4, characterised in that at least one communication passage (28) is arranged in a bulkhead (9a) separating the two chambers (7, 29), which passage is blocked by the stem of the control rod (10) when the latter leaves its rest position.

6. Mechanism according to Claim 4 or Claim 5, characterised in that a relief valve (39) is provided between the two chambers (7, 29), which may be controlled to put the latter into communication irrespective of the position of the control rod (10).

7. Mechanism according to Claim 6, characterised in that the control rod (10) is coupled to a strong spring (22) which tends to move it in the direction (F) for braking and is held in an inoperative position by a cylinder (23) normally supplied with fluid under pressure, and that the relief valve (39) is controlled by a small cylinder (43) supplied in parallel with the cylinder (23) for holding the said spring (22) in such a way as to remain closed as long as the supply to the latter cylinder is maintained and to open when the opposite case applies.

8. Mechanism according to any one of Claims 1 to 7, characterised in that the wedge (12) is mounted at the end of the control rod (10) and is able to swing slightly relative to the axis (11) of the said rod.

9. Mechanism according to any one of Claims 1 to 8, characterised in that the rollers (13) are held in a cage (15) mounted at the end of the control rod (10) and pushed by a return spring (16) in the direction of convergence of the surfaces (12a, 12b) of the wedge (12).

**Patentansprüche**

1. Betätigungsmechanismus für eine Scheibenbremse, mit

einem Kolben, der mit einem Bremsbacken verbunden ist,

einem Keil mit zwei geneigten Flächen, die geringfügig konvergieren und unter der Wirkung eines Steuergliedes in Querrichtung bezüglich der Verschiebungsrichtung des Kolbens zwischen zum Kolben bzw. einem Gegenstück gehörenden Flächen in Längsrichtung verschiebbar sind, wobei jede dieser Flächen im wesentlichen parallel zu der ihr gegenüberliegenden Fläche des Keils verläuft, und.

— mindestens einem Paar Rollen, die beidseitig zu dem Keil angeordnet sind und zwischen dessen Flächen und den gegenüberliegenden Flächen des Kolbens und des Gegenstückes rollen können,

dadurch gekennzeichnet, daß der Raum zwischen den Flächen (5a, 17a) des Kolbens (5) und des Gegenstücks (17), in dem sich der Keil (12) und die Rollen (13) verschieben können, als geschlossene Kammer (7) ausgebildet ist, die mit einer hydraulischen Flüssigkeit gefüllt ist, und daß das Steuerglied eine Stange (10) ist, die, wenn sie in diese hydraulische Kammer (7) bei ihren Längsbewegungen ausgehend von einer Ruhestellung unterschiedlich tief eindringt, dort Volumenänderungen hervorruft, die eine hydraulische Kraft auf den Kolben (5) ausüben, wobei die entsprechende Verschiebung (p') des letzteren geringfügig größer ist als die Verschiebung (p), die ihm mechanisch von dem Keil (12) über die Rollen (13) bei einer gleichen Verschiebung (f) der Steuerstang (10) mitgeteilt würde, wenn keine hydraulische Flüssigkeit in der Kammer (7) vorhanden ist.

2. Mechanismus nach Anspruch 1, dadurch gekennzeichnet, daß bei gleicher Verschiebung (f) der Steuerstange (10) die Verschiebung (p') des Kolbens auf hydraulischem Wege um 1 bis 5% größer ist als seine Verschiebung (p) auf mechanischem Wege.

3. Mechanismus nach Anspruch 1 oder 2, dadurch gekennzeichnet, daß das Gegenstück (17) in der gleichen Richtung wie der Kolben (5) beweglich ist und sich bei hydraulischem Betrieb unter der Vorspannung einer oder mehrerer Rückholfeder (14) in Richtung auf den Kolben (5) von einer ortsfesten Anlagefläche (8a) entfernen kann, um mit der bzw. den Rollen (13) zwischen dem Keil (12) und dem Gegenstück (17) permanent in Berührung zu bleiben.

4. Mechanismus nach einem der Ansprüche 1 bis 3, dadurch gekennzeichnet, daß die hydraulische Kammer (7) mit einer Kammer (29) zum Zuführen hydraulischer Flüssigkeit konstanten Drucks in Verbindung steht, von der sie isoliert ist, wenn die Steuerstange (10) ihre Ruhestellung verläßt.

5. Mechanismus nach Anspruch 4, dadurch gekennzeichnet, daß eine die beiden Kammern (7, 29) trennende Trennwand (9a) von mindestens einer Verbindungsleitung (28) durchbohrt ist, die von dem Schaft der Steuerstange (10) verschlossen wird, wenn diese ihre Ruhestellung verläßt.

6. Mechanismus nach Anspruch 4 oder 5, dadurch gekennzeichnet, daß zwischen den beiden Kammern (7, 29) ein Ablaßventil (39) vorgesehen ist, das so steuerbar ist, daß es die letzteren unabhängig von der Stellung der Steuerstang (10) miteinander in Verbindung setzt.

7. Mechanismus nach Anspruch 6, dadurch gekennzeichnet, daß die Steuerstange (10) mit einer starken Feder (22) verbunden ist, die die Neigung hat, sie in Bremsrichtung (F) zu verschieben, und von einem Stellmotor (23), der normalerweise mit einem Druckmittel beaufschlagt wird, in der Außerbetriebsstellung gehalten wird, und daß das Ablaßventil (39) von einem kleinen Stellmotor (43) gesteuert wird, der parallel zu dem Stellmotor (23) zum Halten der Feder (22) gespeist wird, um geschlossen zu bleiben, solange der letztere Stell- motor beaufschlagt wird, und um im entgegengesetzten Fall zu öffnen.

8. Mechanismus nach einem der Ansprüche 1 bis 7, dadurch gekennzeichnet, daß der Keil (12) am Ende der Steuerstange (10) mit der Möglichkeit eines geringen Versatzes bezüglich der Achse (11) der Stange angebracht ist.

10. Mechanismus nach einem der Ansprüche 1 bis 8, dadurch gekennzeichnet, daß die Rollen (13) in einem Käfig (15) gehalten sind, der am Ende der Steuerstange (10) angebracht ist und von einer Rückholfeder (16) in Richtung der Konvergenz der Flächen (12a, 12b) des Keils (12) vorgespannt ist.

Fig 1

0 161 119

Fig 2

Fig 3